# EUROPÄISCHE PATENTSCHRIFT

(11) **EP 3 033 542 B1**
(45) Veröffentlichungstag und Bekanntmachung des Hinweises auf die Patenterteilung: **12.12.2018**
(21) Anmeldenummer: 14747822.6
(22) Anmeldetag: 17.07.2014
(51) Int. Cl.: F16F 15/14

(54) **FLIEHKRAFTPENDEL**
CENTRIFUGAL FORCE PENDULUM
PENDULE À FORCE CENTRIFUGE

(30) Priorität: 12.08.2013 DE 102013215887
(43) Veröffentlichungstag der Anmeldung: 22.06.2016
(73) Patentinhaber: Schaeffler Technologies AG & Co. KG, 91074 Herzogenaurach (DE)
(72) Erfinder: JUNKER, Uli, 77652 Offenburg (DE)
(86) Internationale Anmeldenummer: PCT/DE2014/200330
(87) Internationale Veröffentlichungsnummer: WO 2015/021968

(56) Entgegenhaltungen:
- EP-A1- 2 607 743
- WO-A2-2011/076169
- DE-A1-102009 051 724

## Beschreibung

Die Erfindung betrifft ein Fliehkraftpendel, mit dessen Hilfe Pendelmassen bei Drehzahlschwankungen unter Fliehkrafteinfluss auf einen anderen Radius verlagert werden können, um eine der Drehzahlschwankung entgegen gerichtetes Rückstellmoment zu erzeugen, wodurch das Ausmaß der Drehzahlschwankung gedämpft werden kann.

Aus DE 10 2009 042 831 A1 ist ein Fliehkraftpendel bekannt, das zwischen einem Zweimassenschwungrad und einem Kupplungsdeckel einer Getriebekupplung montiert werden kann. Das Fliehkraftpendel weist mehrere Pendelmassen auf, die jeweils über zwei Pendelbahnen an einer Ausgangsseite des Zweimassenschwungrads abgestützt sind und über die Pendelbahnen in einem begrenzten Ausmaß infolge eines drehzahlabhängigen Fliehkrafteinflusses zwischen einer radial inneren Stellung und einer radial äußeren Stellung verlagert werden können, um eine der Drehzahlschwankung entgegen gerichtetes Rückstellmoment zu erzeugen.

Das Dokument DE 10 2009 051 724 A1 zeigt alle Merkmale des Oberbegriffs von Anspruch 1 und wird als der nächstliegende Stand der Technik angesehen.

Es besteht ein ständiges Bedürfnis durch einfache konstruktive Maßnahmen eine hohe Lebensdauer bei einem Fliehkraftpendel zu erreichen.

Es ist die Aufgabe der Erfindung Maßnahmen aufzuzeigen, die bei geringem konstruktiven Aufwand eine hohe Lebensdauer bei einem Fliehkraftpendel ermöglichen.

Die Lösung der Aufgabe erfolgt erfindungsgemäß durch ein Fliehkraftpendel mit den Merkmalen des Anspruchs 1. Bevorzugte Ausgestaltungen der Erfindung sind in den Unteransprüchen angegeben, die jeweils einzeln oder in Kombination einen Aspekt der Erfindung darstellen können.

Erfindungsgemäß ist ein Fliehkraftpendel zur Dämpfung und/oder Tilgung von, insbesondere über eine Antriebswelle eines Kraftfahrzeugmotors eingeleiteten, Drehschwingungen vorgesehen mit einer im Drehmomentfluss eines Antriebsstrangs montierbaren Befestigungsscheibe, insbesondere Eingangsflansch oder Ausgangsflansch eines Zweimassenschwungrads, einer fliehkraftbedingt relativ zur Befestigungsscheibe verlagerbaren Pendelmasse und mindestens einer in einer Scheibenlaufbahn der Befestigungsscheibe und einer Pendellaufbahn der Pendelmasse geführten Laufrolle zur Führung der Pendelmasse relativ zur Befestigungsscheibe zwischen einer Mittellage und einer Extremauslenkungslage, wobei zwischen der Befestigungsscheibe und der Pendelmasse ein, insbesondere als Rampe ausgestaltetes, Abhebeelement zur beabstandeten Positionierung der Pendelmasse zur Befestigungsscheibe im Bereich der Laufrolle zumindest in der Extremauslenkungslage vorgesehen ist.

Die Pendelmasse hat unter Fliehkrafteinfluss das Bestreben eine möglichst weit vom Drehzentrum entfernte Stellung anzunehmen. Die "Nulllage" ist also die radial am weitesten vom Drehzentrum entfernte Stellung, welche die jeweilige Pendelmasse in der radial äußeren Stellung einnehmen kann. Bei einer konstanten Antriebsdrehzahl und konstantem Antriebsmoment wird die jeweilige Pendelmasse diese radial äußere Stellung einnehmen. Bei Drehzahlschwankungen lenkt die jeweilige Pendelmasse aufgrund ihrer Massenträgheit entlang ihrer Pendelbahn aus und kann die Pendelmasse aus der mit der "Nulllage" korrespondierenden Mittellage auslenken. Die jeweilige Pendelmasse kann aufgrund der entsprechenden Ausgestaltung der Scheibenlaufbahn und der Pendellaufbahn dadurch in Richtung des Drehzentrums der Drehachse der Befestigungsscheibe bis maximal in die Extremauslenkungslage verschoben werden. Die Fliehkraft auf die jeweilige Pendelmasse wird dadurch aufgeteilt in eine Komponente tangential und eine weitere Komponente normal zur Bewegungsrichtung der Pendelmasse. Die tangentiale Kraftkomponente stellt die Rückstellkraft bereit, welche die Pendelmasse wieder in seine Mittellage bringen will, während die Normalkraftkomponente auf ein die Drehzahlschwankungen einleitendes Krafteinleitungselement, insbesondere ein Ausgangsflansch eines Zweimassenschwungrads, einwirkt und dort ein Gegenmoment erzeugt, das der Drehzahlschwankung entgegenwirkt und die eingeleiteten Drehzahlschwankungen dämpft. Bei besonders starken Drehzahlschwankungen, insbesondere bei Start-Stop-Situation eines Kraftfahrzeugmotors, kann die Pendelmasse aus der Mittellage bis in die Extremauslenkungslage maximal ausgeschwungen sein und die radial am weitesten innen liegende Stellung annehmen. Insbesondere ist bei einer Relativbewegung der Pendelmasse in eine erste Umfangsrichtung und in eine der ersten Umfangsrichtung entgegen gesetzten Umfangsrichtung jeweils eine Extremauslenkungslage vorgesehen.

Beispielsweise durch Herstellungs- und/oder Montagetoleranzen kann eine Relativbewegung der Befestigungsscheibe zur Pendelmasse in axialer Richtung der Laufrolle stattfinden. In einem ungünstigen Fall kann hierbei ein Kontakt der Pendelmasse mit der Befestigungsscheibe erfolgen, wodurch zwischen der Pendelmasse und der Befestigungsscheibe eine reibungsbehaftete Relativbewegung stattfinden kann, die insbesondere bei starken Drehzahlschwankungen und hohen Relativgeschwindigkeiten der Pendelmasse zur Befestigungsscheibe die Funktionsfähigkeit des Fliehkraftpendels beeinträchtigen kann und beispielsweise durch unnötigen Verschleiß und/oder Abrieb die Lebensdauer des Fliehkraftpendels reduzieren kann. Durch das insbesondere als Rampe ausgeformte Abhebeelement kann ein großflächiger Reibkontakt der Pendelmasse mit der Befestigungsscheibe im Bereich der Laufrolle auf einen deutlich kleineren Kontakt im Bereich des Abhebeelements reduziert werden, so dass das Ausmaß von Reibungseffekten zwischen der Pendelmasse und der Befestigungsscheibe zumindest reduziert werden kann, wodurch bei geringem konstruktiven Aufwand eine hohe Lebensdauer bei dem Fliehkraftpendel ermöglicht ist.

Insbesondere kann das Abhebeelement deutlich zur Laufrolle beabstandet positioniert werden, so dass an der Laufrolle angreifende Kräfte durch ein Verkippen der Pendelmasse und/oder der Befestigungsscheibe relativ zur Laufrolle durch ein Anschlagen an dem Abhebeelement zumindest reduziert werden können. Der "Bereich der Laufrolle", in dem die Pendelmasse zumindest in der Extremstellung zu der Befestigungsscheibe beabstandet positioniert ist, ist insbesondere eine Kreisfläche mit einem Durchmesser D um eine Mittelachse der Laufrolle, die einen Durchmesser d aufweist, wobei insbesondere 1,5 ≤ D/d ≤ 5,0, vorzugsweise 2,0 ≤ D/d ≤ 4,0 und besonders bevorzugt 2,5 ≤ D/d ≤ 3,0 beträgt. Insbesondere ist das Abhebeelement außerhalb dieses Bereichs angeordnet. Insbesondere ist die Befestigungsscheibe im Wesentlichen mittig zur axialen Erstreckung der Laufrolle positioniert, während die Pendelmasse eine erste Teilmasse und eine zweite Teilmasse aufweist, zwischen denen die Befestigungsscheibe positioniert ist, wobei insbesondere die erste Teilmasse und die zweite Teilmassen über Abstandsbolzen drehfest miteinander verbunden sind. Alternativ ist es möglich, dass hierzu analog die Befestigungsscheibe auf zwei Teilscheiben aufgeteilt ist und die Pendelmasse zwischen den Teilscheiben angeordnet ist. Die Scheibenlaufbahn und/oder die Pendellaufbahn können als bogenförmige Langlöcher ausgestaltet sein, wobei der Krümmungsverlauf der Scheibenlaufbahn und/oder der Pendellaufbahn derart gewählt sein können, dass in der Mittellager bei einer Positionierung der Laufrolle mittig entlang der Erstreckung des Langlochs der Scheibenlaufbahn und der Pendellaufbahn die Pendelmasse radial außen und in der Extremauslenkungslage bei einer Positionierung der Laufrolle in einer Endstellung der Erstreckung des Langlochs der Scheibenlaufbahn und der Pendellaufbahn radial innen positioniert ist.

Insbesondere ist das Abhebeelement, insbesondere ausschließlich, von der Befestigungsscheibe ausgebildet, wobei das Abhebeelement insbesondere einstückig mit der Befestigungsscheibe ausgebildet ist. Die Pendelmasse kann dadurch besonders einfach ausgestaltet sein. Insbesondere können Unwuchten bei der Pendelmasse vermieden werden, so dass unnötige Kippmomente vermieden werden können. Eine Abstimmung der Pendelmasse des Fliehkraftpendels an eine zu Dämpfende Drehschwingung, insbesondere ein Vielfaches der Motorordnung eines Kraftfahrzeugmotors, ist dadurch erleichtert. Die Pendelmasse kann insbesondere als ebene Scheibe, beispielsweise als Kreisringsegment, ausgestaltet sein, wobei die Pendelmasse keine in axialer Richtung des Fliehkraftpendels abstehende Erhebungen aufweist, wobei gegebenenfalls mehr als eine Pendelmasse über einen Bolzen, insbesondere Abstandbolzen, miteinander verbunden sein können.

Vorzugsweise ist zwischen der Mittellage und der Extremauslenkungslage ein Kontakt der Befestigungsscheibe mit der Pendelmasse ausschließlich über das Abhebeelement herstellbar, wobei insbesondere ein Kontakt der Befestigungsscheibe und/oder der Pendelmasse mit dem Abhebeelement ausschließlich im Wesentlichen linienförmig erfolgt. Die Befestigungsscheibe und die Pendelmasse sind vorzugsweise zueinander beabstandet, so dass im Wesentlichen kein direkter Kontakt vorliegt. Bei einer gegebenenfalls auftretenden Relativbewegung der Befestigungsscheibe zur Pendelmasse in axialer Richtung der Laufrolle erfolgt ab einem bestimmten Mindestauslenkungswinkel der Pendelmasse ein direkter Kontakt der Pendelmasse mit der Befestigungsscheibe ausschließlich über das Abhebeelement. Eine reibungsbehaftete Kontaktfläche zwischen der Pendelmasse und der Befestigungsscheibe kann hierbei gering gehalten werden. Insbesondere ist die Kontaktfläche zumindest in einem Teilbereich des von der Pendelmasse überstreichbaren Auslenkungswinkelbereichs im Wesentlichen linienförmig, indem beispielsweise eine Kante eine schiefe Ebene kontaktiert.

Besonders bevorzugt weist die Laufrolle mindestens einen in Umfangsrichtung der Laufrolle umlaufenden Zentrierbord zur Positionierung der Befestigungsscheibe und/oder der Pendelmasse in axialer Richtung der Laufrolle relativ zur Laufrolle auf, wobei insbesondere zwischen dem Zentrierbord und der Scheibenlaufbahn der Befestigungsscheibe und/oder zwischen dem Zentrierbord und der Pendellaufbahn der Pendelmasse eine Spielpassung ausgebildet ist. Der Zentrierbord kann als eine insbesondere einstückige von der übrigen Laufrolle abstehende Erhebung oder Rippe ausgestaltet sein. Der Zentrierbord kann eine im Betrieb gegebenenfalls auftretende Relativbewegung der Befestigungsscheibe zur Pendelmasse in axialer Richtung der Laufrolle zumindest begrenzen. Durch das Abhebeelement kann zudem vermieden werden, dass der Zentrierbord in die Scheibenlaufbahn und/oder in die Pendellaufbahn hineingelangt und in der Extremauslenkungslage an dem Ende der Scheibenlaufbahn und/oder der Pendellaufbahn hart anschlagen kann. Durch das Abhebeelement kann eine plastische Verformung des Zentrierbords in der Scheibenlaufbahn und/oder in der Pendellaufbahn vermieden werden, so dass die Funktionsfähigkeit des Zentrierbords eine Zentrierung zu erreichen nicht beeinträchtigt wird und eine lange Lebensdauer des Fliehkraftpendels ermöglicht ist.

Insbesondere ist in der Mittellage das Abhebeelement in radialer Richtung bezogen auf eine Drehachse der Befestigungsscheibe zur Pendelmasse beabstandet. Das Abhebeelement kann dadurch erst ab einem bestimmten Mindestauslenkungswinkel wirksam werden, so dass ein Schleifkontakt an dem Abhebeelement bei einem geringen Mindestauslenkungswinkel vermieden ist. Hierbei wird die Erkenntnis ausgenutzt, dass bei geringen Drehmomentwechslen und damit korrespondierenden geringen Auslenkungswinkeln der Pendelmasse eine Beschädigung des Fliehkraftpendels, insbesondere eines Zentrierbords der Laufrolle, nicht zu befürchten ist und nachteilige Effekte auf die Funktionsfähigkeit des Fliehkraftpendels, sofern überhaupt vorhanden, allenfalls gering sind. Ein unnötiger vorzeitiger Kontakt der Pendelmasse mit der Befestigungsscheibe über das Abhebeelement kann dadurch vermieden werden und eine größere Strecke in axialer Richtung der Laufrolle für eine axiale Relativbewegung der Pendelmasse zur Befestigungsscheibe genutzt werden.

Vorzugsweise ist das Abhebeelement in Umfangsrichtung, insbesondere im Wesentlichen geschlossen, umlaufend ausgeführt. Die Herstellung der Befestigungsscheibe, insbesondere durch Metallguss, kann dadurch vereinfacht werden. Ferner kann an mehr als einer Stelle ein Kontakt der Pendelmasse mit der Befestigungsscheibe über das Abhebeelement vorgesehen werden, so dass Kippmomente vermieden werden können.

Besonders bevorzugt weist das Abhebeelement eine in radialer Richtung bezogen auf eine Drehachse der Befestigungsscheibe verlaufende Rampensteigung auf. Das Abhebeelement kann dadurch als Rampe ausgestaltet sein, die zumindest mit einem Anteil in radialer Richtung ihr Ausmaß eines Abstehens ändert. Insbesondere steigt das rampenförmige Abhebeelement, wenn es von der Befestigungsscheibe ausgebildet wird, nach radial innen an, so dass ein in Umfangsrichtung weisender Endbereich der Pendelmasse bei einem ansteigenden Auslenkungswinkel über das Abhebeelement an der Befestigungsscheibe derart abgleiten kann, dass der axiale Abstand der Pendelmasse zur Befestigungsscheibe im Bereich der Laufrolle vergrößert wird. Besonders bevorzugt kann durch die gewählte Rampensteigung erreicht werden, dass ein Zentrierbord der Laufrolle vollständig aus der Scheibenlaufbahn und/oder aus der Pendellaufbahn herausgelangt, bevor die Extremauslenkungslage erreicht ist, so dass ein Anschlagen des Zentrierbords an einem Ende der Scheibenlaufbahn und/oder der Pendellaufbahn sicher vermieden werden kann.

Erfindungsgemäß geht das als Rampe ausgestaltete Abhebeelement in ein abstehendes Plateau über, wobei in der Extremauslenkungslage ein Kontakt der Pendelmasse mit der Befestigungsscheibe über das Plateau herstellbar ist. Durch das Plateau kann bei besonders großen Drehmomentschwankungen, wenn die Extremauslenkungslage der Pendelmasse erreicht wird, eine zu hohe Flächenpressung bei einem linienförmigen Kontakt vermieden werden. Die Bauteilbelastungen einer an dem rampenförmigen Abhebeelement abgleitenden Kante der Pendelmasse oder der Befestigungsscheibe können dadurch begrenzt werden. Durch das Plateau kann ein flächiger Kontakt zwischen der Pendelmasse und der Befestigungsscheibe in der Extremauslenkungslage vorgesehen werden, wobei der flächige Kontakt in einem deutlich geringer Bereich stattfindet als bei einem flächigen Kontakt der Pendelmasse mit der Befestigungsscheibe ohne Abhebeelement.

Die Erfindung betrifft ferner einen Antriebsstrang für ein Kraftfahrzeug mit einem eine Antriebswelle aufweisenden Kraftfahrzeugmotor, einem mit der Antriebswelle koppelbaren Kraftfahrzeuggetriebe und einem im Drehmomentfluss zwischen der Antriebswelle und dem Kraftfahrzeuggetriebe vorgesehenem Fliehkraftpendel, das wie vorstehend beschrieben aus- und weitergebildet sein kann, zur Dämpfung und/oder Tilgung von Drehschwingungen der Antriebswelle. Insbesondere ist im Drehmomentfluss zwischen der Antriebswelle und dem Kraftfahrzeuggetriebe ein Zweimassenschwungrad zur Dämpfung und/oder Tilgung von Drehschwingungen der Antriebswelle vorgesehen, wobei das Zweimassenschwungrad einen Eingangsflansch zur Einleitung eines Drehmoments und einen über ein Energiespeicherelement, insbesondere Bogenfeder, relativ verdrehbaren Ausgangsflansch aufweist, wobei der Eingangsflansch oder der Ausgangsflansch die Befestigungsscheibe des Fliehkraftpendels ausbildet. Durch das insbesondere als Rampe ausgeformte Abhebeelement kann ein großflächiger Reibkontakt der Pendelmasse mit der Befestigungsscheibe im Bereich der Laufrolle auf einen deutlich kleineren Kontakt im Bereich des Abhebeelements reduziert werden, so dass das Ausmaß von Reibungseffekten zwischen der Pendelmasse und der Befestigungsscheibe zumindest reduziert werden kann, wodurch bei geringem konstruktiven Aufwand eine hohe Lebensdauer bei dem Antriebsstrang ermöglicht ist.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische Draufsicht auf ein Fliehkraftpendel,
Fig. 2: eine schematische Schnittansicht des Fliehkraftpendels aus Fig. 1 entlang einer Schnittlinie A - A in einer optimalen Stellung,
Fig. 3: eine schematische Detailansicht des Fliehkraftpendels aus Fig. 1 in einer Mittellage,
Fig. 4: eine schematische Schnittansicht des Fliehkraftpendels aus Fig. 3 entlang einer Schnittlinie A - A bei einer axialen Fehlstellung,
Fig. 5: eine schematische Detailansicht des Fliehkraftpendels aus Fig. 1 in einer Zwischenauslenkungslage,
Fig. 6: eine schematische Schnittansicht des Fliehkraftpendels aus Fig. 5 entlang einer Schnittlinie A - A bei einer axialen Fehlstellung,
Fig. 7: eine schematische Detailansicht des Fliehkraftpendels aus Fig. 1 entlang einer Schnittlinie A - A in einer Extremauslenkungslage und
Fig. 8: eine schematische Schnittansicht des Fliehkraftpendels aus Fig. 7 bei einer axialen Fehlstellung.

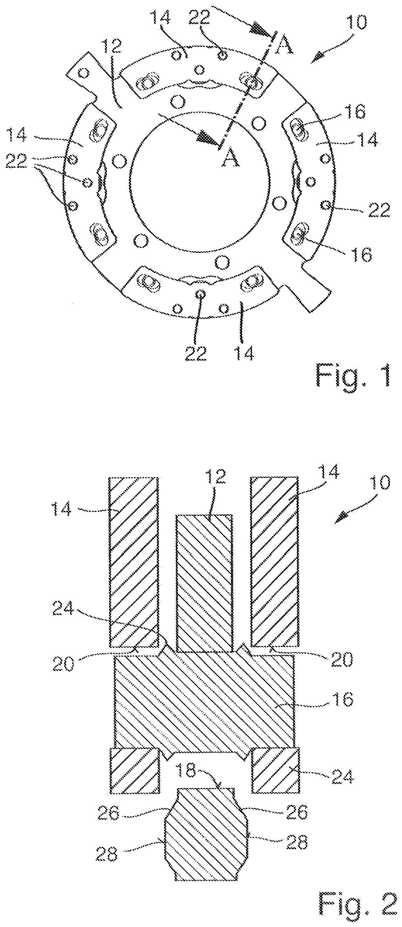

Das in Fig. 1 und Fig. 2 dargestellte Fliehkraftpendel 10 weist eine als Ausgangsflansch eines Zweimassenschwungrads zur Drehschwingungsdämpfung einer Antriebswelle eines Kraftfahrzeugmotors ausgestaltete Befestigungsscheibe 12 mit mehreren in Umfangsrichtung hintereinander angeordneten Pendelmassen 14 auf. Die Pendelmasse 14 ist über zwei Laufrollen 16 relativ bewegbar zur Befestigungsscheibe 12 geführt. Hierzu ist die Laufrolle 16 in einer Scheibenlaufbahn 18 der Befestigungsscheibe 12 und in einer Pendellaufbahn 20 der Pendelmasse 14 geführt. Im dargestellten Ausführungsbeispiel sind zwei über Abstandsbolzen 22 miteinander verbundene Pendelmassen 14 vorgesehen, zwischen denen die Befestigungsscheibe 12 vorgesehen ist. Die Laufrolle 16 ist dadurch in zwei Pendellaufbahnen 20 geführt, so dass ein Verkippen der Laufrolle 16 vermieden ist. Die Laufrolle 16 weist zwei in axialer Richtung zueinander beabstandete Zentrierborde 24 auf, zwischen denen die Befestigungsscheibe 12 axial zentriert werden kann. Zwischen den Zentrierborden 24 und der Scheibenlaufbahn 18 kann zumindest eine Spielpassung vorgesehen sein, um die Laufrolle 16 bei der Montage in die Befestigungsscheibe 12 einstecken zu können. In der dargestellten Betriebsstellung kann die Laufrolle 16 zumindest aufgrund der an den Pendelmassen 14 angreifenden Fliehkraft nach radial außen gezogen werden, bis die Laufrolle 16 an der Scheibenbahn 18 anliegt und die Zentrierborde 24 eine wirksame Zentrierung der Befestigungsscheibe 12 erreichen können.

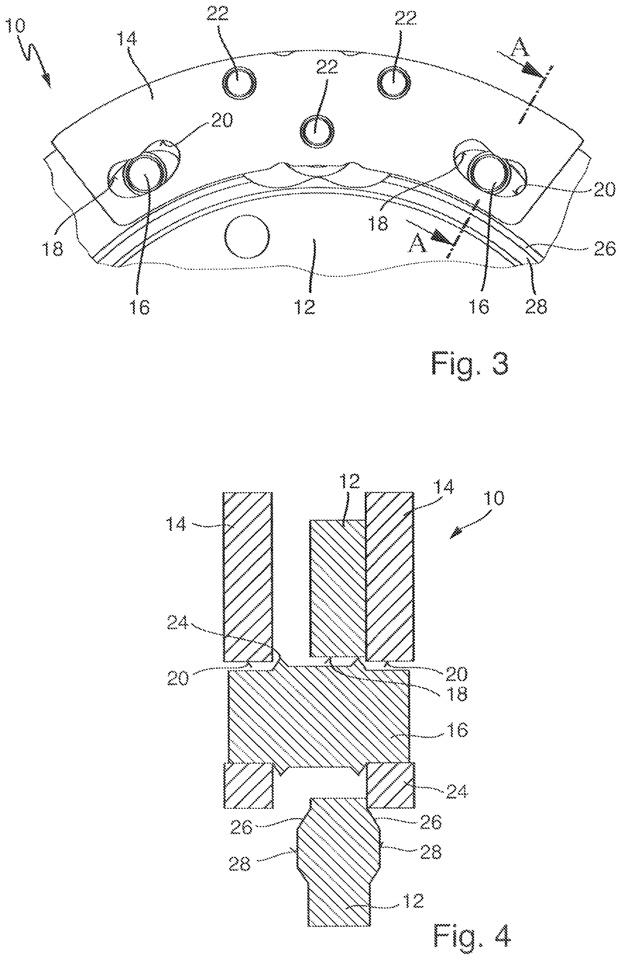

Wie in Fig. 3 und Fig. 4 dargestellt, kann bei einer hinreichend großen Axialkraft eine Relativbewegung des Befestigungsscheibe 12 relativ zur Pendelmasse 14 auftreten, wobei die Befestigungsscheibe 12 sogar an dem Zentrierbord 24 hoch laufen kann und der Zentrierbord 24 in die Scheibenbahn 18 hinein gelangen kann. Hierbei kann ein vergleichsweise großflächiger Reibkontakt der Befestigungsscheibe 12 mit der Pendelmasse 14 auftreten, der sich jedoch bei nicht auftretenden Drehzahlschwankungen der Befestigungsscheibe 12 in Ermangelung einer Relativverdrehung der Pendelmasse 14 zur Befestigungsscheibe 12 nicht auswirken würde. Auch geringe Relativverdrehungen der Pendelmasse 14 zur Befestigungsscheibe 12 um einen geringen Auslenkungswinkel bei geringen Drehzahlschwankungen der Befestigungsscheibe 12 beeinträchtigen die Funktionsweise des Fliehkraftpendels 10 kaum.

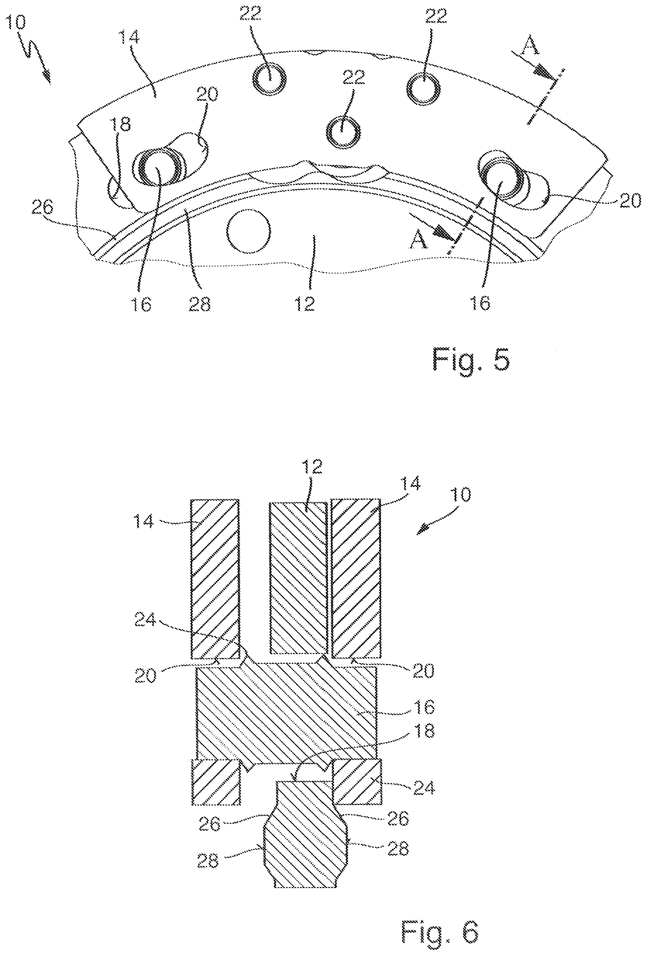

Wie in Fig. 5 und Fig. 6 dargestellt, kann bei einem hinreichend großen Auslenkungswinkel der Pendelmasse 14 zur Befestigungsscheibe 12 bei einer entsprechend hohen Drehzahlschwankung die Pendelmasse 14 an einem einstückig von der Befestigungsscheibe 12 ausgebildeten rampenförmigen Abhebeelement 26 in Kontakt geraten. Bei einer weiteren Relativbewegung der Pendelmasse 14 zur Befestigungsscheibe 12 kann eine Kante der Pendelmasse 14 an dem als Rampe ausgestaltetem Abhebeelement 26 entlanggleiten, so dass ein flächiger Kontakt der Befestigungsscheibe 12 mit der Pendelmasse 14 aufgehoben und durch einen linienförmigen Kontakt über das Abhebeelement 26 ersetzt werden kann.

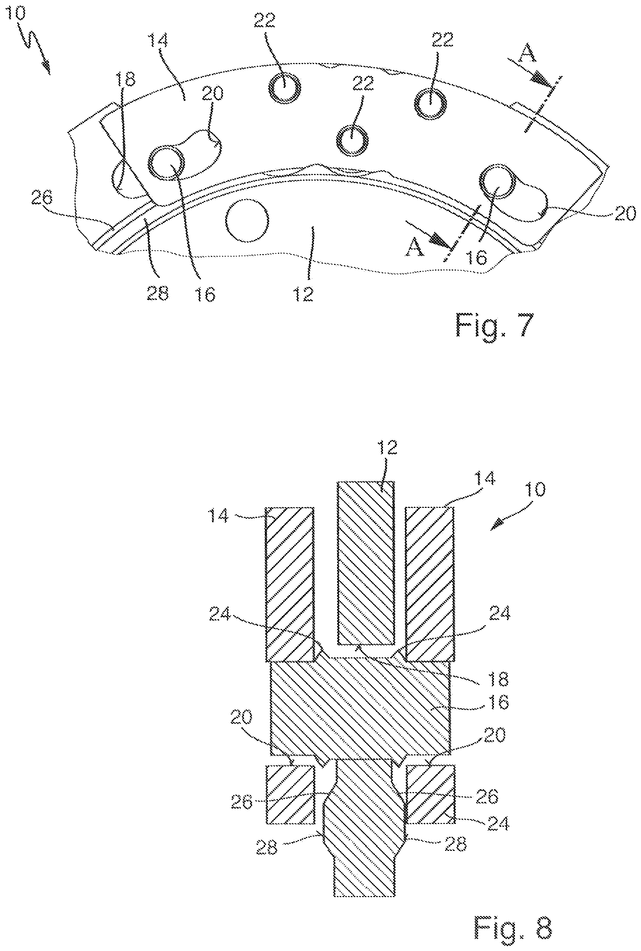

Bei der in Fig. 7 und Fig. 8 dargestellten Extremauslenkungslage ist die Pendelmasse 14 soweit an dem Abhebelement entlang geglitten, dass die Befestigungsscheibe 12 relativ zur Pendelmasse 14 in eine Position axial verlagert ist, in welcher der Zentrierbord 24 im Vergleich zu der in Fig. 4 dargestellten Situation vollständig aus der Scheibenlaufbahn 18 herausgewandert ist. Ein hartes Anschlagen des Zentrierbords 24 an dem Ende der Scheibenlaufbahn 18 ist dadurch vermieden. Der rampenförmige Teil des Abhebeelements 26 kann hierbei in einem Plateau 28 enden, an dem die Pendelmasse 14 in der Extremauslenkungslage anliegen kann.

### Bezugszeichenliste

- 10: Fliehkraftpendel
- 12: Befestigungsscheibe
- 14: Pendelmasse
- 16: Laufrolle
- 18: Scheibenlaufbahn
- 20: Pendellaufbahn
- 22: Abstandsbolzen
- 24: Zentrierbord
- 26: Abhebeelement
- 28: Plateau

## Patentansprüche

1. Fliehkraftpendel zur Dämpfung und/oder Tilgung von, insbesondere über eine Antriebswelle eines Kraftfahrzeugmotors eingeleiteten, Drehschwingungen, mit einer im Drehmomentfluss eines Antriebsstrangs montierbaren Befestigungsscheibe (12), insbesondere Eingangsflansch oder Ausgangsflansch eines Zweimassenschwungrads,
einer fliehkraftbedingt relativ zur Befestigungsscheibe verlagerbaren Pendelmasse (14) und
mindestens einer in einer Scheibenlaufbahn (18) der Befestigungsscheibe (12) und einer Pendellaufbahn (20) der Pendelmasse (14) geführten Laufrolle (16) zur Führung der Pendelmasse (14) relativ zur Befestigungsscheibe (12) zwischen einer Mittellage und einer Extremauslenkungslage,
wobei zwischen der Befestigungsscheibe (12) und der Pendelmasse (14) ein, als Rampe ausgestaltetes, Abhebeelement (26) zur beabstandeten Positionierung der Pendelmasse (14) zur Befestigungsscheibe (12) im Bereich der Laufrolle (16) zumindest in der Extremauslenkungslage vorgesehen ist, **dadurch gekennzeichnet, dass** das als Rampe ausgestaltete Abhebeelement (26) in ein abstehendes Plateau (28) übergeht, wobei in der Extremauslenkungslage ein Kontakt der Pendelmasse (14) mit der Befestigungsscheibe (12) über das Plateau (28) herstellbar ist.

2. Fliehkraftpendel nach Anspruch 1 **dadurch gekennzeichnet, dass** das Abhebeelement (26), insbesondere ausschließlich, von der Befestigungsscheibe (12) ausgebildet ist, wobei das Abhebeelement (26) insbesondere einstückig mit der Befestigungsscheibe (12) ausgebildet ist.

3. Fliehkraftpendel nach Anspruch 1 oder 2 **dadurch gekennzeichnet, dass** zwischen der Mittellage und der Extremauslenkungslage ein Kontakt der Befestigungsscheibe (12) mit der Pendelmasse (14) ausschließlich über das Abhebeelement (26) herstellbar ist, wobei insbesondere ein Kontakt der Befestigungsscheibe (12) und/oder der Pendelmasse (14) mit dem Abhebeelement (26) ausschließlich im Wesentlichen linienförmig erfolgt.

4. Fliehkraftpendel nach einem der Ansprüche 1 bis 3 **dadurch gekennzeichnet, dass** die Laufrolle (16) mindestens einen in Umfangsrichtung der Laufrolle (16) umlaufenden Zentrierbord (24) zur Positionierung der Befestigungsscheibe (12) und/oder der Pendelmasse (14) in axialer Richtung der Laufrolle (16) relativ zur Laufrolle (16) aufweist, wobei insbesondere zwischen dem Zentrierbord (24) und der Scheibenlaufbahn (18) der Befestigungsscheibe (12) und/oder zwischen dem Zentrierbord (24) und der Pendellaufbahn (20) der Pendelmasse (14) eine Spielpassung ausgebildet ist.

5. Fliehkraftpendel nach einem der Ansprüche 1 bis 4 **dadurch gekennzeichnet, dass** in der Mittellage das Abhebeelement (26) in radialer Richtung bezogen auf eine Drehachse der Befestigungsscheibe (12) zur Pendelmasse (14) beabstandet ist.

6. Fliehkraftpendel nach einem der Ansprüche 1 bis 5 **dadurch gekennzeichnet, dass** das Abhebeelement (26) in Umfangsrichtung, insbesondere im Wesentlichen geschlossen, umlaufend ausgeführt ist.

7. Fliehkraftpendel nach einem der Ansprüche 1 bis 6 **dadurch gekennzeichnet, dass** das Abhebeelement (26) eine in radialer Richtung bezogen auf eine Drehachse der Befestigungsscheibe (12) verlaufende Rampensteigung aufweist.

8. Antriebsstrang für ein Kraftfahrzeug mit einem eine Antriebswelle aufweisenden Kraftfahrzeugmotor, einem mit der Antriebswelle koppelbaren Kraftfahrzeuggetriebe und einem im Drehmomentfluss zwischen der Antriebswelle und dem Kraftfahrzeuggetriebe vorgesehenem Fliehkraftpendel (10) nach einem der Ansprüche 1 bis 7 zur Dämpfung und/oder Tilgung von Drehschwingungen der Antriebswelle.

9. Antriebsstrang nach Anspruch 8 **dadurch gekennzeichnet, dass** im Drehmomentfluss zwischen der Antriebswelle und dem Kraftfahrzeuggetriebe ein Zweimassenschwungrad zur Dämpfung und/oder Tilgung von Drehschwingungen der Antriebswelle vorgesehen ist, wobei das Zweimassenschwungrad einen Eingangsflansch zur Einleitung eines Drehmoments und einen über ein Energiespeicherelement, insbesondere Bogenfeder, relativ verdrehbaren Ausgangsflansch aufweist, wobei der Eingangsflansch oder der Ausgangsflansch die Befestigungsscheibe (12) des Fliehkraftpendels (10) ausbildet.

## Claims

1. Centrifugal force pendulum for damping and/or absorbing torsional vibrations which are introduced, in particular, via a drive shaft of a motor vehicle engine, having a fastening disc (12) which can be mounted in the torque flow of a drive train, in particular an input flange or an output flange of a dual-mass flywheel, a pendulum mass (14) which can be moved relative to the fastening disc in a centrifugal force-induced manner, and at least one running roller (16) which is guided in a disc raceway (18) of the fastening disc (12) and a pendulum raceway (20) of the pendulum mass (14) in order to guide the pendulum mass (14) relative to the fastening disc (12) between a central position and an extreme deflection position, a lifting element (26) which is configured as a ramp being provided between the fastening disc (12) and the pendulum mass (14) in order to position the pendulum mass (14) in a spaced apart manner with respect to the fastening disc (12) in the region of the running roller (16) at least in the extreme deflection position, **characterized in that** the lifting element (26) which is configured as a ramp merges into a protruding plane (28), it being possible for a contact of the pendulum mass (14) with the fastening disc (12) to be established via the plane (28) in the extreme deflection position.

2. Centrifugal force pendulum according to Claim 1, **characterized in that** the lifting element (26) is configured, in particular exclusively, by the fastening disc (12), the lifting element (26) being configured, in particular, in one piece with the fastening disc (12).

3. Centrifugal force pendulum according to Claim 1 or 2, **characterized in that** a contact of the fastening disc (12) with the pendulum mass (14) can be established exclusively via the lifting element (26) between the central position and the extreme deflection position, a contact of the fastening disc (12) and/or the pendulum mass (14) with the lifting element (26) taking place, in particular, exclusively in a substantially linear manner.

4. Centrifugal force pendulum according to one of Claims 1 to 3, **characterized in that** the running roller (16) has at least one centring rim (24) which runs around in the circumferential direction of the running roller (16) in order to position the fastening disc (12) and/or the pendulum mass (14) in the axial direction of the running roller (16) relative to the running roller (16), a clearance fit being configured, in particular, between the centring rim (24) and the disc raceway (18) of the fastening disc (12) and/or between the centring rim (24) and the pendulum raceway (20) of the pendulum mass (14).

5. Centrifugal force pendulum according to one of Claims 1 to 4, **characterized in that**, in the central position, the lifting element (26) is spaced apart from the pendulum mass (14) in the radial direction in relation to a rotational axis of the fastening disc (12) .

6. Centrifugal force pendulum according to one of Claims 1 to 5, **characterized in that** the lifting element (26) is configured so as to run around in the circumferential direction, in particular in a substantially closed manner.

7. Centrifugal force pendulum according to one of Claims 1 to 6, **characterized in that** the lifting element (26) has a ramp slope which runs in the radial direction in relation to a rotational axis of the fastening disc (12).

8. Drive train for a motor vehicle having a motor vehicle engine which has a drive shaft, having a motor vehicle transmission which can be coupled to the drive shaft, and having a centrifugal force pendulum (10) according to one of Claims 1 to 7 which is provided in the torque flow between the drive shaft and the motor vehicle transmission in order to damp and/or absorb torsional vibrations of the drive shaft.

9. Drive train according to Claim 8, **characterized in that** a dual-mass flywheel for damping and/or absorbing torsional vibrations of the drive shaft is provided in the torque flow between the drive shaft and the motor vehicle transmission, the dual-mass flywheel having an input flange for introducing a torque and an output flange which can be rotated in a relative manner via an energy store element, in particular a bow spring, the input flange or the output flange configuring the fastening disc (12) of the centrifugal force pendulum (10) .

## Revendications

1. Pendule centrifuge destiné à atténuer et/ou amortir des vibrations torsionnelles, notamment induites par le biais d'un arbre d'entraînement d'un moteur de véhicule automobile, comprenant une plaque de fixation (12), notamment une bride d'entrée ou une bride de sortie d'un volant oscillant à double masse, pouvant être monté dans le flux de couple d'une chaîne cinématique,
une masse pendulaire (14) pouvant être positionnée par rapport à la plaque de fixation sous l'effet de la force centrifuge et
au moins un galet de roulement (16), guidé dans un chemin de roulement de plaque (18) de la plaque de fixation (12) et un chemin de roulement de pendule (20) de la masse pendulaire (14), servant à guider la masse pendulaire (14) par rapport à la plaque de fixation (12) entre une position centrale et une position de débattement extrême, un élément de décollement (26), réalisé sous la forme d'une rampe et destiné au positionnement espacé de la masse pendulaire (14) par rapport à la plaque de fixation (12) dans la zone du galet de roulement (16) au moins dans la position de débattement extrême, se trouvant entre la plaque de fixation (12) et la masse pendulaire (14),
**caractérisé en ce que** l'élément de décollement (26) réalisé sous la forme d'une rampe se transforme en un plateau (28) espacé, un contact de la masse pendulaire (14) avec la plaque de fixation (12) pouvant être établi par le biais du plateau (28) dans la position de débattement extrême.

2. Pendule centrifuge selon la revendication 1, **caractérisé en ce que** l'élément de décollement (26) est, notamment exclusivement, formé par la plaque de fixation (12), l'élément de décollement (26) étant notamment formé d'un seul tenant avec la plaque de fixation (12).

3. Pendule centrifuge selon la revendication 1 ou 2, **caractérisé en ce qu'**entre la position centrale et la position de débattement extrême, un contact de la plaque de fixation (12) avec la masse pendulaire (14) peut être établi exclusivement par le biais de l'élément de décollement (26), un contact de la plaque de fixation (12) et/ou de la masse pendulaire (14) avec l'élément de décollement (26) s'effectuant exclusivement sensiblement de manière linéique.

4. Pendule centrifuge selon l'une des revendications 1 à 3, **caractérisé en ce que** le galet de roulement (16) possède au moins un bord de centrage (24) circonférentiel dans le sens périphérique du galet de roulement (16), servant au positionnement de la plaque de fixation (12) et/ou de la masse pendulaire (14) dans la direction axiale du galet de roulement (16) par rapport au galet de roulement (16), un ajustement avec jeu étant notamment formé entre le bord de centrage (24) et le chemin de roulement de plaque (18) de la plaque de fixation (12) et/ou entre le bord de centrage (24) et le chemin de roulement de pendule (20) de la masse pendulaire (14).

5. Pendule centrifuge selon l'une des revendications 1 à 4, **caractérisé en ce que** dans la position centrale, l'élément de décollement (26) est espacé de la masse pendulaire (14) dans la direction radiale par rapport à un axe de rotation de la plaque de fixation (12).

6. Pendule centrifuge selon l'une des revendications 1 à 5, **caractérisé en ce que** dans le sens périphérique, l'élément de décollement (26) est réalisé à mouvement tournant, notamment sensiblement fermé.

7. Pendule centrifuge selon l'une des revendications 1 à 6, **caractérisé en ce que** l'élément de décollement (26) possède un gradient de pente qui s'étend dans la direction radiale par rapport à un axe de rotation de la plaque de fixation (12).

8. Chaîne cinématique pour un véhicule automobile comprenant un moteur de véhicule automobile possédant un arbre d'entraînement, une boîte de vitesses de véhicule automobile pouvant être accouplée avec l'arbre d'entraînement et un pendule centrifuge (10) selon l'une des revendications 1 à 7 disposé dans le flux de couple entre l'arbre d'entraînement et la boîte de vitesses de véhicule automobile et servant à atténuer et/ou amortir les vibrations torsionnelles de l'arbre d'entraînement.

9. Chaîne cinématique selon la revendication 8, **caractérisée en ce qu'**un volant oscillant à double basse servant à atténuer et/ou amortir les vibrations torsionnelles de l'arbre d'entraînement est disposé dans le flux de couple entre l'arbre d'entraînement et la boîte de vitesses de véhicule automobile, le volant oscillant à double basse possédant une bride d'entrée destinée à induire un couple et une bride de sortie pouvant effectuer une torsion relative par le biais d'un élément accumulateur d'énergie, notamment un ressort en arc, la bride d'entrée ou la bride de sortie formant la plaque de fixation (12) du pendule centrifuge (10).
